# EUROPEAN PATENT APPLICATION

(11) **EP 1 627 781 A1**
(43) Date of publication of application: **22.02.2006**
(21) Application number: 05017245.1
(22) Date of filing: 08.08.2005
(51) Int. Cl.: B60R 21/20

(54) **Vehicle airbag system**

(30) Priority: 16.08.2004 JP 2004236423
(71) Applicant: Moriroku Kabushiki Kaisha, Tokyo (JP)
(72) Inventor: Horiyama, Jungo, Mooka-shi Tochigi (JP)
(74) Representative: Herzog, Markus

(57) **Abstract**

A vehicle airbag system includes: an outside lid (2) formed by part of an interior panel; an outside hinge (3) connecting one side of the outside lid to the interior panel (1); a bursting portion (4) that is connected to an opening edge of the outside lid and that bursts due to inflation pressure of an airbag inside the outside lid; a bracket (5) joined to a reverse face of the interior panel; and an inside lid (10) that is joined to a reverse face of the outside lid and connected to the bracket via an inside hinge (11) so that the inside lid can be opened together with the outside lid. The bracket and the inside lid are integrally connected via a thin connecting portion (12) that is arranged so as to correspond to an edge of the outside lid excluding a predetermined opening initiation end and to break during opening of the outside lid.

## Description

### RELATED APPLICATION DATA

The Japanese priority application No. 2004-236423 upon which the present application is based is hereby incorporated in its entirety herein by reference.

### BACKGROUND OF THE INVENTION

### FIELD OF THE INVENTION

The present invention relates to a vehicle airbag system, and particularly to an improvement of a vehicle airbag system comprising: an outside lid formed by part of an interior panel facing a vehicle compartment; an outside hinge connecting a base end portion of the outside lid to the interior panel; a bursting portion that is connected to an opening edge of the outside lid and that bursts so that the outside lid opens when the outside lid receives a pressure at a predetermined value or higher from the inside; a bracket joined to a reverse face of the interior panel at a periphery of the outside lid; an airbag case supported on the bracket; an inflator housed in the airbag case; an airbag that is inflated and deployed by gas generated by the inflator to protrude into the vehicle compartment while opening the outside lid; an inside hinge; and an inside lid that is joined to a reverse face of the outside lid and connected to the bracket via the inside hinge so that the inside lid can be opened together with the outside lid.

### DESCRIPTION OF THE RELATED ART

Japanese Patent Application Laid-open No. 2004-66955 discloses such a conventional vehicle airbag system.

In general, when an airbag of a vehicle airbag system is inflated and deployed, the airbag does not always first exert pressure on a predetermined opening initiation portion of an outside lid. If the airbag first comes into pressure contact with any portion other than the predetermined opening initiation portion of the outside lid, the outside lid might open while twisting, and in this case the airbag might be deployed out of the regular deployment direction to some extent.

### SUMMARY OF THE INVENTION

The present invention has been accomplished under the above-mentioned circumstances, and it is an object thereof to provide a vehicle airbag system that enables an airbag to be deployed always in an appropriate posture by reliably opening an outside lid from a predetermined opening initiation portion of the outside lid, even if the airbag first comes into pressure contact with any portion other than the predetermined opening initiation portion when the airbag is inflated and deployed.

In order to achieve the above-mentioned object, according to a first feature of the invention, there is provided a vehicle airbag system comprising: an outside lid formed by part of an interior panel facing a vehicle compartment; an outside hinge connecting a base end portion of the outside lid to the interior panel; a bursting portion that is connected to an opening edge of the outside lid and that bursts so that the outside lid opens when the outside lid receives a pressure at a predetermined value or higher from the inside; a bracket joined to a reverse face of the interior panel at a periphery of the outside lid; an airbag case supported on the bracket; an inflator housed in the airbag case; an airbag that is inflated and deployed by gas generated by the inflator to protrude into the vehicle compartment while opening the outside lid; an inside hinge; and an inside lid that is joined to a reverse face of the outside lid and connected to the bracket via the inside hinge so that the inside lid can be opened together with the outside lid, wherein a thin connecting portion provides a connection between the bracket and the inside lid, the thin connecting portion being arranged so as to correspond to an edge of the outside lid excluding a predetermined opening initiation end and to break during opening of the outside lid.

The interior panel corresponds to an instrument panel 1 of an embodiment of the present invention, which will be described later.

According to a second feature of the present invention, in addition to the first feature, the thin connecting portion is formed so as to provide the shortest connection between the bracket and the inside lid, and the bracket and the inside lid are vibration-welded to reverse faces of the interior panel and the outside lid, respectively.

In accordance with the first feature of the present invention, when the airbag is inflated, even if the initial point of pressure contact of the airbag with the inside lid is displaced from the position of the predetermined opening initiation end of the outside lid, the outside lid can be opened reliably from the predetermined opening initiation end because of the resistance from the thin connecting portion connecting the bracket and the inside lid. Therefore, it is possible to inflate and deploy the airbag into the vehicle compartment in the appropriate posture, thereby appropriately restraining the posture of a passenger. Furthermore, since the thin connecting portion breaks during the opening of the outside lid, it does not prevent the outside lid from being fully opened.

Since the thin connecting portion can appropriately maintain the relative positions of the bracket and the inside lid, the gap therebetween can be made small. As a result, the inside lid can be joined to the reverse face of the outside lid over a wide area, thus effectively reinforcing the outside lid. Furthermore, the smaller the gap between the bracket and the inside lid, the easier it is for the thin connecting portion to break, so that after the burst of the bursting portion of the opening initiation end, other bursting portions also burst quickly, thus increasing the speed at which the airbag is deployed.

When the bracket and the inside lid are integrally molded from a synthetic resin, the thin connecting portion functions, in cooperation with the inside hinge, as a passage for the resin to flow between the bracket and the inside lid. Therefore, it is possible to smoothen the resin flow through the passage, thus enhancing the ease in integrally molding the bracket and the inside lid.

Furthermore, in accordance with the second feature of the present invention, since the bracket is connected via the thin connecting portion to the inside lid through the shortest distance without slack, when they are vibration-welded to the interior panel and the outside lid, the bracket and the inside lid can be reliably joined to the interior panel and the outside lid while maintaining the appropriate relative positions of the bracket and the inside lid.

The above-mentioned object, other objects, characteristics, and advantages of the present invention will become apparent from preferred embodiments that will be described in detail below by reference to the attached drawings.

### BRIEF DESCRIPTION OF THE DRAWINGS

FIG. 1 is a perspective view showing an airbag system according to a first embodiment of the present invention, mounted on an instrument panel on a passenger seat side of an automobile.
FIG. 2 is a sectional view along line 2-2 in FIG. 1.
FIG. 3 is an exploded perspective view of the instrument panel and a bracket of the airbag system.
FIG. 4 is a sectional view along line 4-4 in FIG. 3.
FIG. 5 is a sectional view along line 5-5 in FIG. 3.
FIG. 6 is a partial plan view of the bracket.
FIG. 7 is a diagram corresponding to FIG. 5 and showing an initial opening state of inside and outside lids when the airbag is inflated and deployed.
FIG. 8 is a diagram corresponding to FIG. 5 and showing intermediate and final opening states of the inside and outside lids when the airbag is inflated and deployed.
FIG. 9 is a diagram corresponding to FIG. 6 and showing a second embodiment of the present invention.

### DESCRIPTION OF PREFERRED EMBODIMENTS

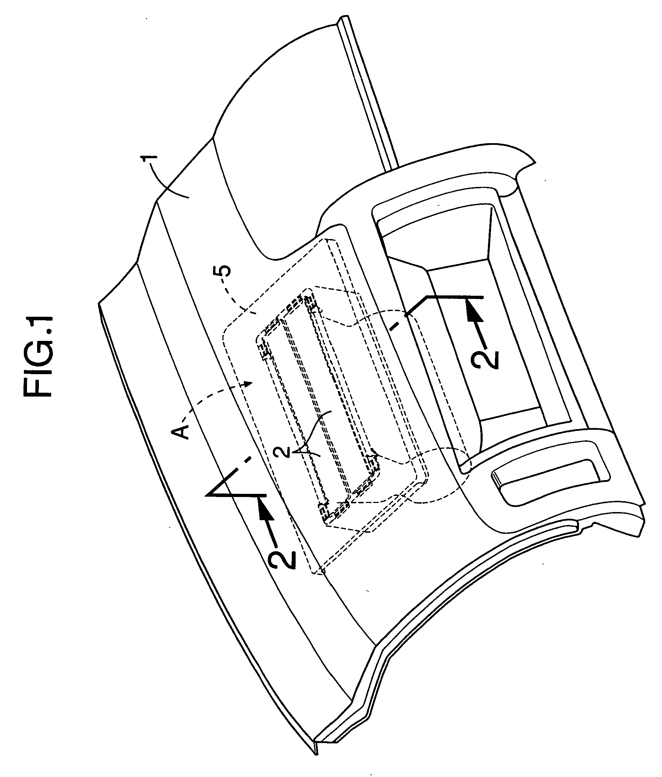

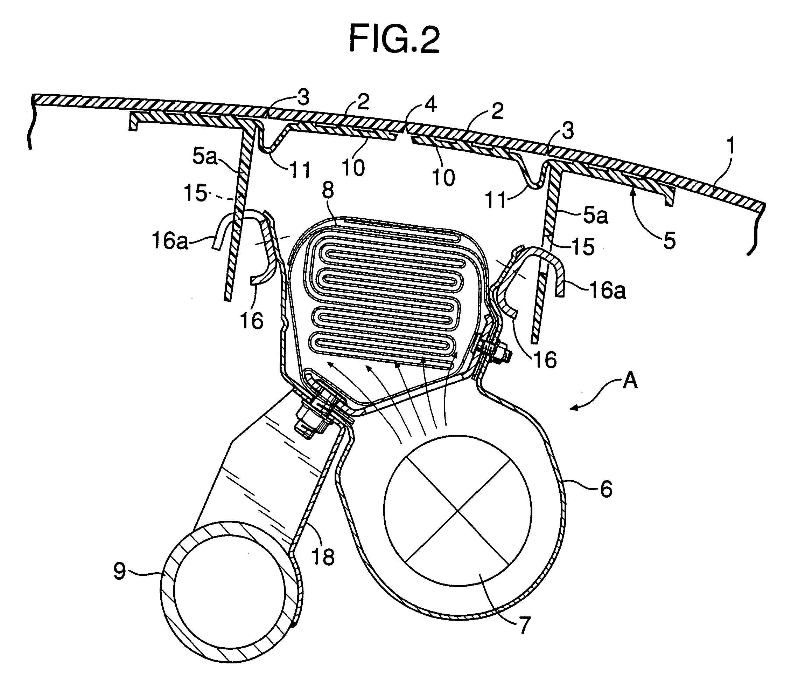

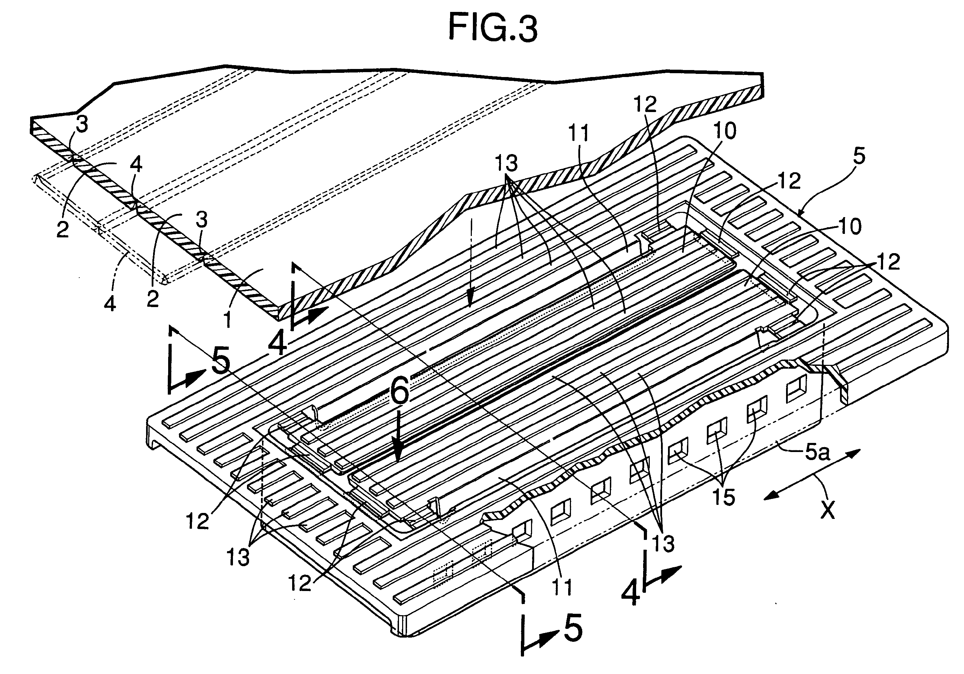

Referring firstly to FIG. 1 and FIG. 2, an instrument panel 1 on a passenger seat side in a vehicle compartment of an automobile is equipped with an airbag system A according to a first embodiment of the present invention. The airbag system A includes: a pair of rectangular outside lids 2 that adjoin each other and are formed by part of the instrument panel 1 made of a synthetic resin such as PP; thin outside hinges 3 that integrally connect the instrument panel 1 and mutually opposing base end portions of the outside lids 2; a grooved bursting portion 4 that connects together the leading edge portions of the two outside lids 2 and provides a connection between opposite sides of each of the outside lids 2 and the instrument panel 1, and that bursts to make the outside lids 2 open like double doors when the outside lids 2 receive a pressure at a predetermined value or higher from the inside; a frame-shaped bracket 5 joined to a reverse face of the instrument panel 1 around the periphery of the outside lids 2; and an airbag case 6 connected to the bracket 5. The airbag case 6 is connected to the bracket 5 by engaging a large number of claws 16a of a pair of hooks 16 attached to opposite side walls of the airbag case 6, with a large number of engagement holes 15 provided in a pair of support walls 5a that hang down from the inner side edges of the bracket 5 to face each other (see FIG. 2 and FIG. 3). The airbag case 6 is also firmly secured via a bracket 18 to a vehicle body strengthening member 9 that supports the instrument panel 1 and a steering column, which is not illustrated.

The airbag case 6 houses an inflator 7 and an airbag 8. The inflator 7 operates so as to generate gas when the vehicle body receives an excessive impact such as a collision impact. The airbag 8 is inflated and deployed toward the outside lids 2 by means of the gas generated by the inflator 7.

Since the pair of outside lids 2 open like a double door with the outside hinges 3 as fulcrums when the bursting portion 4 bursts due to inflation pressure of the airbag 8, leading edges of the outside lids 2 on sides opposite to the outside hinges 3 become predetermined opening initiation ends 2a of the outside lids 2.

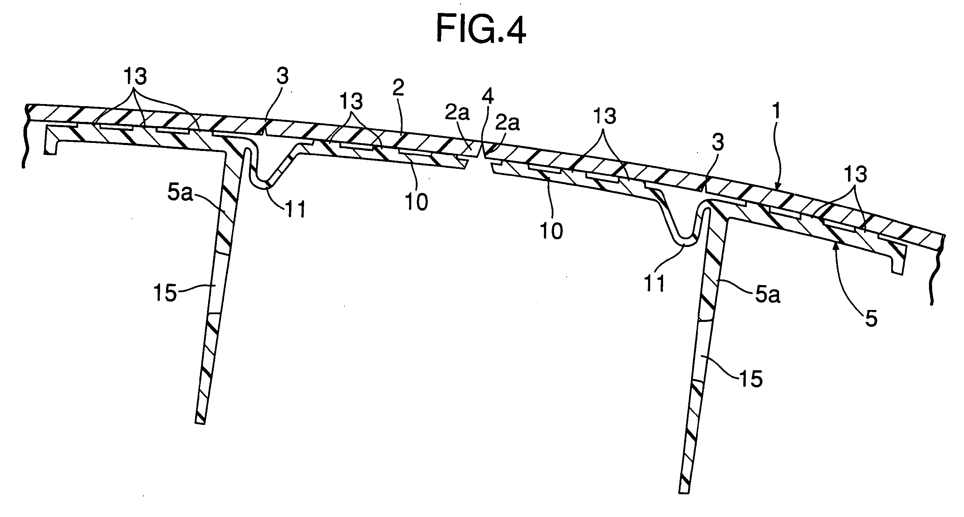

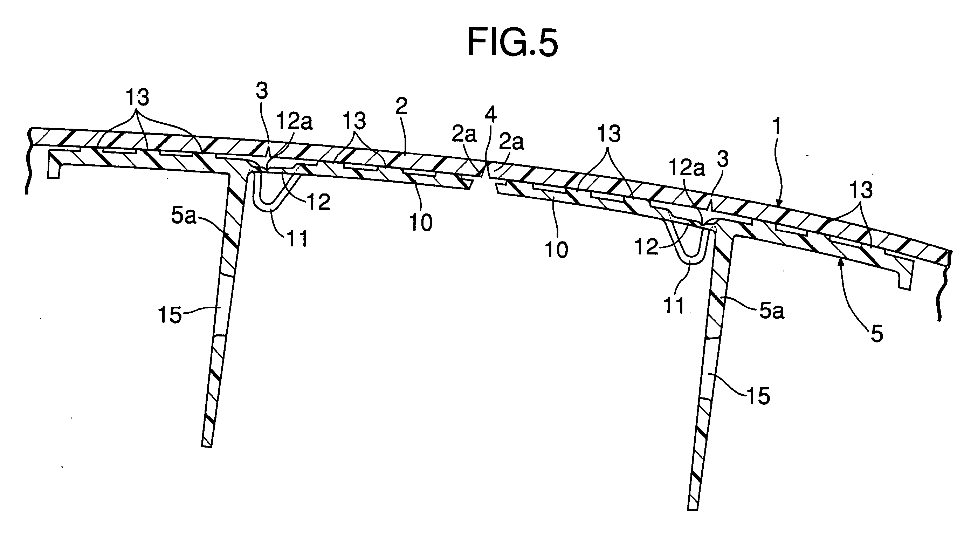

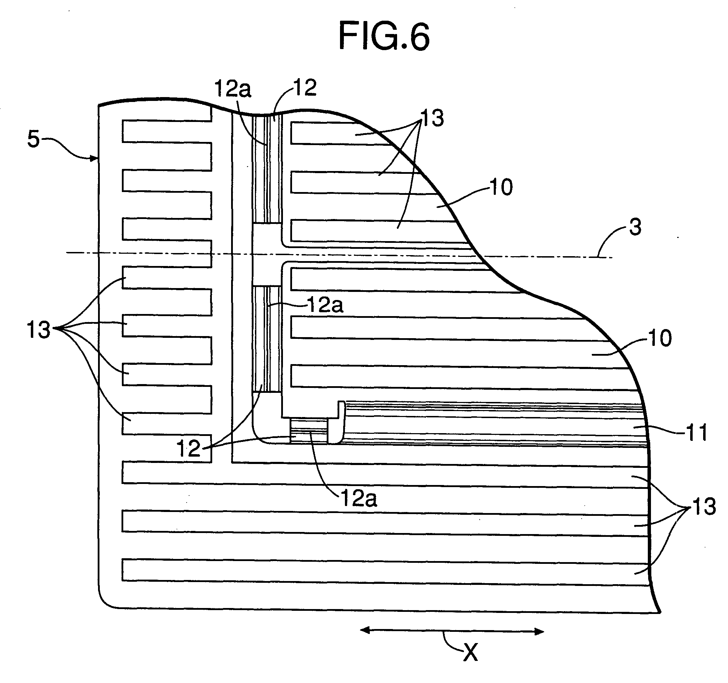

In FIG. 2 to FIG. 6, disposed inside the frame-shaped bracket 5 are a pair of inside lids 10 corresponding to the pair of outside lids 2. The inside lids 10 are connected to the bracket 5, via U-shaped inside hinges 11 arranged at positions corresponding to the outside hinges 3 and via a plurality of thin connecting portions 12 connecting opposite sides of each of the inside lids 10 to the bracket 5. The bracket 5, inside lids 10, inside hinges 11, and thin connecting portions 12 are molded integrally using a synthetic resin such as TPO or TPE.

The inside lids 10 are joined to reverse faces of the outside lids 2 so as to open integrally therewith. The inside hinges 11 allow the inside lids 10 to open integrally with the outside lids 2. The thin connecting portions 12 have flat faces parallel to plate faces of the inside lids 10 so as to provide the shortest connection between the bracket 5 and the inside lids 10.

The thin connecting portions 12 break when a tensile load at a predetermined value or higher is applied between the bracket 5 and the inside lids 10. In order to specify the breaking load and the breaking position therefor, V-shaped grooves 12a, which extend in a direction perpendicular to the direction of the tensile load, are formed on one surface of each of the thin connecting portions 12.

The bracket 5 and the inside lids 10 are vibration-welded to the reverse faces of the instrument panel 1 and the outside lids 2, respectively. For this welding, a large number of welding ribs 13 are beforehand formed integrally with surfaces of the bracket 5 and the inside lids 10. The welding ribs 13 extend in a direction X which is perpendicular to opposite sides of the inside lids 10.

The vibration welding is carried out as follows: the ribs 13 of the bracket 5 and the inside lids 10 are pressed respectively against the reverse faces of the instrument panel 1 and the outside lids 2; the ribs 13 are vibrated in the longitudinal direction X of the ribs 13 by a vibration device (not illustrated); and the ribs 13 are welded to the instrument panel 1 and the outside lids 2 by the resultant frictional heat.

The operation of this embodiment is now described.

When the automobile is involved in a collision accident and the inflator 7 operates to generate and supply gas into the airbag 8, the airbag 8 starts inflation and first comes into pressure contact with the reverse faces of the inside lids 10. In this process, if initial pressure contact points of the airbag 8 with the inside lids 10 are displaced from the positions of the predetermined opening initiation ends 2a of the outside lids 2, the thin connecting portions 12 providing a connection between the bracket 5 and the inside lids 10 resist the pressure of the airbag 8, thereby minimizing transmission of the opening force from the inside lids 10 to the outside lids 2.

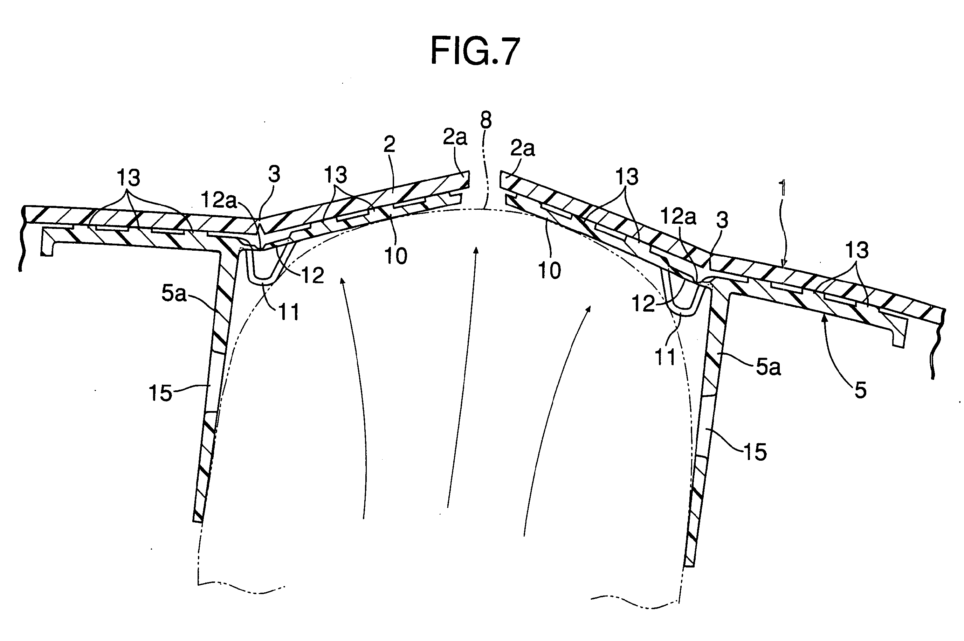

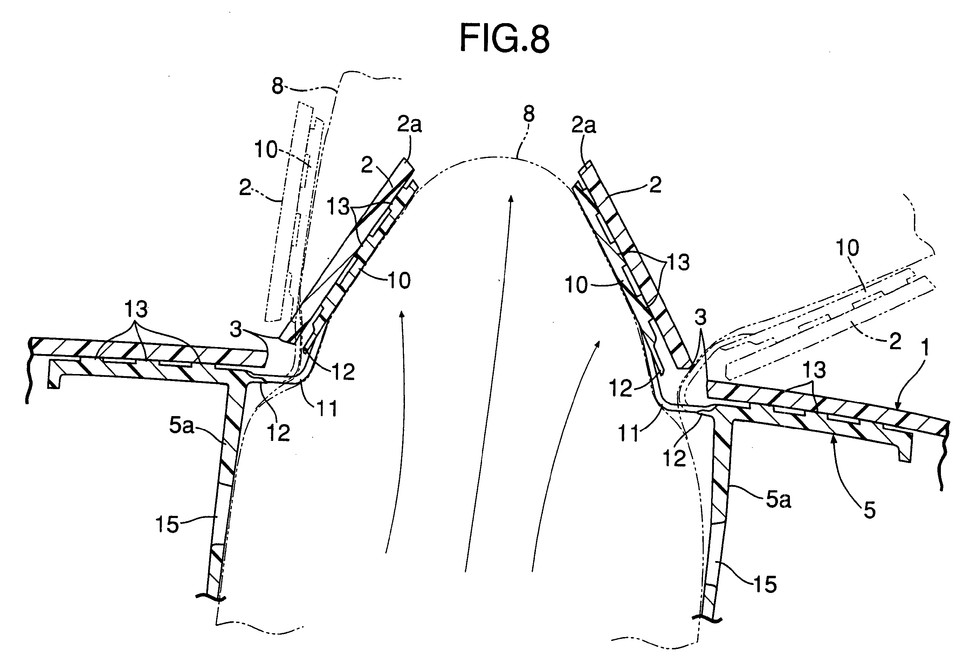

When the airbag 8 continues the inflation and, as shown in FIG. 7, an area of the airbag 8 in pressure contact with the inside lids 10 extends to areas corresponding to the predetermined opening initiation ends 2a of the outside lids 2: the pressure of the airbag 8 effectively acts on the opening initiation ends 2a of the outside lids 2; the bursting portion 4 connecting together the opening initiation ends 2a of the two outside lids 2 bursts; the bursting is then spread to the bursting portions 4 on opposite sides of each of the outside lids 2, so that the two outside lids 2 start to open together with the inside lids 10 in a double door manner with the outside hinges 3 as the fulcrums; the thin connecting portions 12 and the outside hinges 3 are torn off in the process of opening of the lids as shown in FIG. 8; the outside lids 2 and the inside lids 10 then become fully open while extending the U-shaped inside hinges 11; and the airbag 8 protrudes into the vehicle compartment through the resulting opening, thus restraining the posture of a passenger.

In this way, when the airbag 8 is inflated, even if the initial points of pressure contact of the airbag 8 with the inside lids 10 are displaced from the positions of the predetermined opening initiation ends 2a of the outside lids 2, the outside lids 2 can be opened reliably from the predetermined opening initiation ends 2a because of the resistance from the thin connecting portions 12 connecting the bracket 5 and the inside lids 10. Therefore, it is possible to inflate and deploy the airbag 8 into the vehicle compartment in the appropriate posture, thereby appropriately restraining the posture of the passenger.

Furthermore, since the thin connecting portions 12 can appropriately maintain the relative positions of the bracket 5 and the inside lids 10, the gap therebetween can be made small. As a result, the inside lids 10 can be joined to the reverse faces of the outside lids 2 over a wide area, thus effectively reinforcing the outside lids 2.

Moreover, the smaller the gap between the bracket 5 and the inside lids 10, the easier it is for the thin connecting portions 12 to break, so that after the burst of the bursting portion 4 of the opening initiation end 2a, the other bursting portions 4 also burst quickly, thus increasing the speed at which the airbag 8 is deployed.

Moreover, when the bracket 5 and the inside lids 10 are integrally molded from a synthetic resin, since the thin connecting portions 12 function, in cooperation with the inside hinges 11, as a passage for the resin to flow between the bracket 5 and the inside lids 10, it is possible to smoothen the resin flow through the passage, thus enhancing the ease in integrally molding the bracket 5 and the inside lids 10.

Furthermore, since the inside lids 10 are connected via the thin connecting portions 12 to the bracket 5 through the shortest distance without slacking, when carrying out vibration welding of the bracket 5 and the inside lids 10 to the reverse faces of the instrument panel 1 and the outside lids 2, it is possible to vibration-weld the bracket 5 and the inside lids 10 to the instrument panel 1 and the outside lids 2 while maintaining the appropriate relative positions of the bracket 5 and the inside lids 10. Therefore, it is possible to effectively reinforce the instrument panel 1 by the bracket 5, and the outside lids 2 by the inside lids 10.

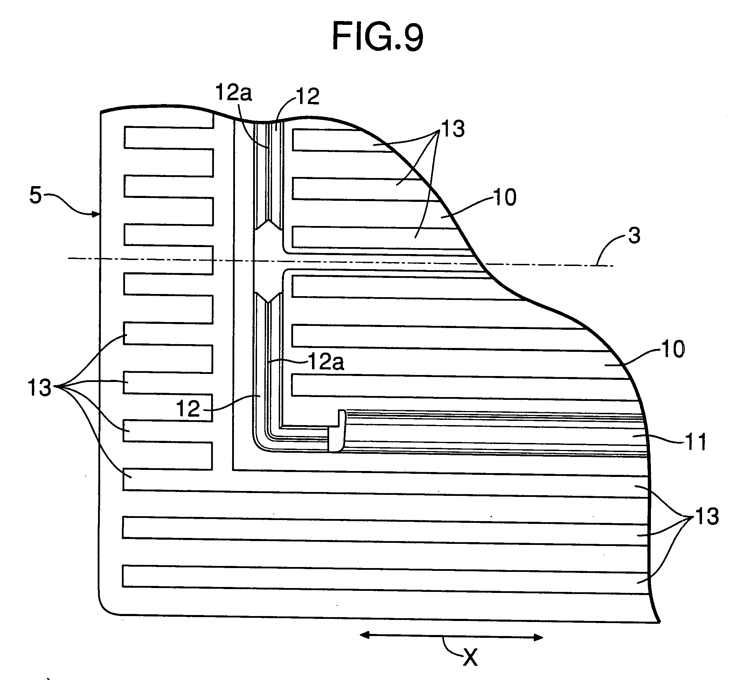

A second embodiment of the present invention is now described by reference to FIG. 9.

In this embodiment, thin connecting portions 12 providing a connection between a bracket 5 and inside lids 10 are formed into a continuous L-shape so as to correspond to the entire edges of outside lids 2 excluding predetermined opening initiation ends 2a; and the other components are the same as those of the preceding embodiment. Therefore, components in FIG. 9 corresponding to those of the first embodiment are denoted by the same reference numerals and symbols, and the description thereof is omitted.

In accordance with this embodiment, the connecting effect by the thin connecting portions 12 can be enhanced; the opening posture of the outside lids 2 can be more appropriately controlled; and the vibration welding of the bracket 5 and the inside lids 10 to an instrument panel 1 and the outside lids 2 can be more appropriately carried out while more reliably maintaining the appropriate relative positions of the bracket 5 and the inside lids 10.

The present invention is not limited to the above-described embodiments, and various changes in design can be made thereto without departing from the subject matter thereof. For example, the airbag system A can be mounted to any interior panel facing the vehicle compartment other than the instrument panel 1. The outside lid 3 and the inside lid 10 may be arranged so as to open in a single door manner.

A vehicle airbag system includes: an outside lid formed by part of an interior panel; an outside hinge connecting one side of the outside lid to the interior panel; a bursting portion that is connected to an opening edge of the outside lid and that bursts due to inflation pressure of an airbag inside the outside lid; a bracket joined to a reverse face of the interior panel; and an inside lid that is joined to a reverse face of the outside lid and connected to the bracket via an inside hinge so that the inside lid can be opened together with the outside lid. The bracket and the inside lid are integrally connected via a thin connecting portion that is arranged so as to correspond to an edge of the outside lid excluding a predetermined opening initiation end and to break during opening of the outside lid.

## Claims

1. A vehicle airbag system comprising:
an outside lid formed by part of an interior panel facing a vehicle compartment;
an outside hinge connecting a base end portion of the outside lid to the interior panel;
a bursting portion that is connected to an opening edge of the outside lid and that bursts so that the outside lid opens when the outside lid receives a pressure at a predetermined value or higher from the inside;
a bracket joined to a reverse face of the interior panel at a periphery of the outside lid;
an airbag case supported on the bracket;
an inflator housed in the airbag case;
an airbag that is inflated and deployed by gas generated by the inflator to protrude into the vehicle compartment while opening the outside lid;
an inside hinge; and
an inside lid that is joined to a reverse face of the outside lid and connected to the bracket via the inside hinge so that the inside lid can be opened together with the outside lid,
wherein a thin connecting portion provides a connection between the bracket and the inside lid, the thin connecting portion being arranged so as to correspond to an edge of the outside lid excluding a predetermined opening initiation end and to break during opening of the outside lid.

2. The vehicle airbag system according to Claim 1, wherein the thin connecting portion is formed so as to provide the shortest connection between the bracket and the inside lid, and wherein the bracket and the inside lid are vibration-welded to reverse faces of the interior panel and the outside lid, respectively.
